# EUROPÄISCHE PATENTANMELDUNG

(11) **EP 1 798 137 A2**
(43) Veröffentlichungstag der Anmeldung: **20.06.2007**
(21) Anmeldenummer: 06125896.8
(22) Anmeldetag: 12.12.2006
(51) Int. Cl.: B62D 33/06

(54) **Nutzfahrzeugkabine mit Innenraumtür**

(30) Priorität: 13.12.2005 DE 102005060002; 13.12.2005 DE 102005060001; 18.09.2006 DE 102006044412
(71) Anmelder: GRAMMER AG, 92224 Amberg (DE)
(72) Erfinder: Tomforde, Johann, 71069 Sindelfingen (DE); Moreno, Claudio, 71065 Sindelfingen (DE)
(74) Vertreter: Hannke, Christian

(57) **Zusammenfassung**

Die Erfindung betrifft eine Nutzfahrzeugkabine für Lastkraftwagen, deren Innenraum mindestens 2 Fahrzeugsitze (2, 3) in einem ersten Funktionsraumbereich (1) und mindestens einen zweiten und dritten Funktionsraumbereich (4, 9) mit Funktionseinrichtungen (19 -24, 28), welche in Fahrtrichtung betrachtet hinter dem ersten Funktionsraumbereich (1) angeordnet sind, aufweist, wobei mindestens 1 schwenkbar gelagerte und an einer vertikal sich erstreckenden Säule (11) befestigte Tür (10;10 a, 10 b) zum wahlweisen Verschließen einer ersten Öffnung (17) des gegenüber des zweiten Funktionsraumbereiches (4) abtrennbaren dritten Funktionsraumbereiches (9) oder einer zweiten Öffnung (7) des gegenüber dem ersten Funktionsraumbereiches (1) abtrennbaren zweiten Funktionsraumbereiches (4) angeordnet ist.

## Beschreibung

Es ist bekannt, Nutzfahrzeugkabinen für Personen, insbesondere für Nutzfahrzeugkabinen von Lastkraftwagen, derart zu gestalten, dass sie in ihrem vorderen Bereich zwei Fahrzeugsitze, nämlich den Fahrersitz und den Beifahrersitz aufweisen und in ihrem hinteren Bereich ein Schlafabteil mit aufklappbaren Betten, die sich quer zur Fahrzeuglängsachse erstrecken, beinhalten. Häufig ist der Fahrzeugsitzbereich als erster Funktionsraumbereich mittels eines auf- und zuziehbaren Vorhanges von dem Schlafbereich getrennt, um in diesem hinteren weiteren Funktionsraumbereich die zum Schlafen notwendige Abdunklung zu erreichen. Hierfür sind im hinteren Funktionsraumbereich häufig keine Seitenfenster, die zusätzlich verdunkelt werden müssten, vorhanden.

In einigen wenigen Fällen weisen derartige Nutzfahrzeugkabinen eine zumeist selbst eingerichtete kleine Kochecke in der Form auf, dass diese durch ein selbst aufgestelltes Mikrowellengerät betrieben wird, wobei sich hierbei häufig das Problem der geeigneten Strom - und Spannungsversorgung aufgrund des begrenzt zur Verfügung stehenden LKW-Batteriestromes ergibt.

Eine solche Ausbildung einer Nutzfahrzeugkabine lässt jedoch keine zusätzliche Anordnung von in sich steifen Bauelementen, die beispielsweise zur Aufhängung von Mobiliar, unabhängig von der Rückwand oder weiteren Außenwänden der Nutzfahrzeugkabine dienen können, zu. Vielmehr weisen die bisherigen Nutzfahrzeugkabinen weder mechanische noch akustische Trennungen zwischen einzelnen Funktionsraumbereichen auf, sofern man einen hinterseitig angeordneten Schlafraum mit einem oder zwei herabklappbaren Betten, wie es bisher bekannt ist, als Funktionsraumbereich bezeichnen kann, auf. Deshalb kann eine momentan im hinteren Funktionsraumbereich schlafende Person sich durchaus durch die im vorderen Funktionsraumbereich sich aufhaltende Person gestört fühlen. Dies trifft ebenso zu, wenn eine Person momentan die Mikrowelle benutzt und hierdurch Essensgeruch der weiteren Person, die momentan schläft oder das Fahrzeug fährt, zugeleitet wird.

Hinzu kommt, dass die bisher bekannten Nutzfahrzeugkabinen ein ungünstiges Innenraumaufteilungskonzept aufweisen. Dies wird dadurch verdeutlicht, dass die bisherigen Nutzfahrzeugkabinen lediglich Platz für die zwei Fahrzeugsitze und maximal zwei hinterseitig angeordnete Betten bieten. Weitere standardmäßig eingebaute Funktionseinrichtungen, wie beispielsweise Kocheinrichtungen oder Sanitär- und Duscheinrichtungen, weisen herkömmliche Nutzfahrzeugkabinen nicht auf.

Demzufolge liegt der vorliegenden Erfindung die Aufgabe zugrunde, eine Nutzfahrzeugkabine für Personen, insbesondere eine Nutzfahrzeugkabine von Lastkraftwagen, deren Innenraum mindestens zwei Fahrzeugsitze in einem ersten Funktionsraumbereich und zudem weitere Funktionsraumbereiche aufweist, zur Verfügung zu stellen, die ein gleichzeitiges Sich-Aufhalten mehrerer Personen innerhalb der Nutzfahrzeugkabine ermöglicht, ohne dass sich hierdurch die Personen in ihren unterschiedlichen Tätigkeiten innerhalb der unterschiedlichen Funktionsraumbereiche gestört fühlen, wobei mehr als zwei Funktionsraumbereiche zur Verfügung stehen sollen.

Diese Aufgabe wird durch die Merkmale des Patenanspruches 1 gelöst.

Eine erfindungsgemäße Nutzfahrzeugkabine für Lastkraftwagen, deren Innenraum mindestens zwei Fahrzeugsitze in einem ersten Funktionsraumbereich und mindestens einen zweiten und einen dritten Funktionsraumbereich mit Funktionseinrichtungen, welche in Fahrtrichtung betrachtet hinter dem ersten Funktionsraumbereich angeordnet sind, aufweist, ist mit mindestens einer schwenkbar gelagerten und an einer vertikal sich erstreckenden Säule befestigten Tür zum wahlweisen Verschließen einer ersten Öffnung des gegenüber dem zweiten Funktionsraumbereich abtrennbaren dritten Funktionsraumbereiches oder einer zweiten Öffnung des gegenüber dem ersten Funktionsraumbereich abtrennbaren zweiten Funktionsraumbereiches ausgestattet. Sofern eine Aufteilung der Nutzfahrzeugkabine in mindestens drei mechanisch, akustisch und geruchsmäßig voneinander getrennte Funktionsraumbereiche vorliegt, kann durch eine derartige Anordnung der Tür aufgrund des begrenzten Innenraumes innerhalb einer handelsüblichen Nutzfahrzeugkabine diese Tür eine Trennwand bildend eingesetzt werden und zwar derart, dass die Tür nur diejenige Trennwand bildet, die notwendig ist, um eine Person, welche sich in dem einem Funktionsraumbereich aufhält, nicht durch eine andere Person, die sich in dem anderen Funktionsraumbereich aufhalten möchte, zu stören.

Beispielsweise ist es bei einer Aufteilung des Nutzfahrzeugkabineninnenraumes derart, dass der erste Funktionsraumbereich in der vorderen Hälfte der Nutzfahrzeugkabine mit den Fahrzeugsitzen angeordnet ist und der zweite Funktionsraumbereich zusammen mit dem dritten Funktionsraumbereich im hinteren Bereich der Nutzfahrzeugkabine derart angeordnet sind, und dass diese mittels einer Trennlinie, die sich in Fahrzeuglängsachse erstreckt, voneinander getrennt sind, möglich, dass die zur Schaffung einer Trennwand auf diese Trennlinie angeordnete notwendige Tür ebenso dafür verwendet werden kann, sie in einer 90 °-Schwenkbewegung dafür zu benutzen, nicht den zweiten und dritten Funktionsraumbereich voneinander zu trennen, sondern den ersten von dem zweiten Funktionsraumbereich zu trennen. Hierdurch kann die sich im zweiten und dritten Funktionsraumbereich aufhaltende Person auf einfache Weise eine Trennwand zwischen dem ersten Funktionsraumbereich der vorderen Hälfte der Nutzfahrzeugkabine und der hinteren Hälfte der Nutzfahrzeugkabine schaffen, um beispielsweise im hinteren Bereich ungestört mittels einer Kücheneinrichtung Essen zuzubereiten oder ungestört die Sanitäranlagen, wie eine Toilette oder einen Waschtisch, zu benutzen.

Die Tür soll derart gestaltet sein, dass sie sowohl links- als auch rechtsseitig einen Anschlag aufweist oder im Bereich der Trennlinien zwischen den einzelnen Funktionsraumbereichen gegen einen Anschlag an der Innenwand der Nutzfahrzeugkabine und/oder gegebenenfalls einen Anschlag an einer zusätzlich bestehenden Trennwand angelegt werden kann.

Die Säule kann an ihren Enden ober- und unterseitig gegenüber dem Innenraum schwenkbar gelagert sein, so dass ein Verschwenken der Tür ein Verschwenken der Säule bewirkt.

Die Säule ist bevorzugt oberseitig mittels eines ersten Schwenklagers am Innendach der Nutzfahrzeugkabine und unterseitig mittels eines zweiten Schwenklagers am Boden der Nutzfahrzeugkabine befestigt. Alternativ kann die Tür gegenüber dem Innenraum und an der Säule schwenkbar derart gelagert sein, dass die Säule fest im Innenraum angeordnet ist und eine Schwenkbewegung der Tür gegenüber dieser arretierten Säule, die eine wesentliche Stützfunktion zusätzlich übernehmen kann, stattfindet.

Die Säule bzw. die Säulen können vorteilhaft aus einem Leichtmetall, wie Aluminium oder eine Aluminiumlegierung gefertigt sein und nachträglich oder bei einer Neuanfertigung in die Nutzfahrzeugkabine eingesetzt werden. Sofern die Säulen mit einem runden, rechteckigen oder jedem beliebigen anderen Querschnitt an ihren Längsseiten ein Führungsschienensystem aufweisen, können diese zum auswechselbaren Einsetzen von Türen, Trennwänden und dgl. verwendet werden. Alternativ kann an der Längsseite der Säule eine Mehrzahl von Steckverbindungen, Schraubverbindungen oder dgl. Verbindungen angeordnet sein, so dass das Verstellen der Tür und weiterer Trennwände stufenlos erfolgen kann.

Die Säulen sind an ihrer Ober- und Unterseite mit oder ohne Schwenklager mittels angeschweißter Flansche mit den Innenseiten der Decke und des Bodens verschraubt, vernietet oder mittels einer ähnlichen Verbindungsart damit verbunden.

Bei der Anordnung von zwei Säulen kann eine Begrenzung unmittelbar hinter dem Fahrersitz und eine weitere seitlich dazu versetzt an der Rückwand der Nutzfahrzeugkabine angeordnet sein, um an diesen beiden Säulen zwei Türen aufzuhängen, die im geschlossenen Zustand mit ihren vorderseitigen Türlängsseiten aufeinander treffen. Hierdurch ergibt sich die Schaffung eines weiteren, vierten Funktionsraumbereiches.

Alternativ können zwei Säulen derart angeordnet sein, dass sie hinter den Fahrzeugsitzen die Begrenzung für eine in einer Zwischenquerwand, die sich in Fahrzeugbreitenrichtung erstreckt, angeordnete Tür links- und rechtsseitig davon darstellen. Eine dieser Säulen kann als Türaufhängung und die zweite Säule als Anschlag für die Tür dienen.

Die Tür ist bevorzugt mehrteilig mit mindestens zwei Türflügeln, die mit einem sich in Türhöhenrichtung erstreckenden Scharniergelenk schwenkbar miteinander verbunden sind, aufgebaut. Dies ermöglicht eine platzsparende und leicht handhabbare Öffnung und Schließung der Tür derart, dass weder die erste noch die zweite Türöffnung geschlossen sind.

Vorzugsweise weist die Tür mindestens zwei parallel zueinander angeordnete lichttransparente Scheiben auf, wobei zwischen den Scheiben höhenverstellbare und in ihrem Neigungswinkel verstellbare Lamellen angeordnet sind. Die Lamellen sind zwischen den Scheiben schützend angeordnet, ohne dass sie durch Benutzung beschädigt werden können. Zudem ist eine derartige Anordnung der Lamellen zwischen den Scheiben als weitestgehend wartungsfrei anzusehen, auch hinsichtlich ihrer Verschmutzung.

Die Tür ist vorteilhaft mit Türgriffen auf beiden Seiten versehen und beidseitig jeweils mit einem Verschließmechanismus ausgestattet, dessen Betätigung von der einen Seite zum Verschließen der Tür keine Öffnungsbewegung von der anderen Seite der Tür aus zulässt.

Alternativ oder zusätzlich kann die Tür ebenso wie eine weitere angeordnete Tür an ihren sich in Höhenrichtung erstreckenden Längsseiten Magnetelemente zum Verbinden mit einer benachbarten Trennwand bzw. mit der weiteren Tür aufweisen. Hierfür sind beide Türen im geschlossenen Zustand derart angeordnet , dass sich ihre vorderseitigen Längsseiten treffen. Die Magnetelemente sind bevorzugt als Dichtelemente ausgebildet, um hierdurch Geruchsstörungen der in benachbarten Funktionsraumbereichen sich aufhaltenden Personen, beispielsweise durch Kocharbeiten, zu vermeiden.

Die Anordnung der Lamellen in den Türen ermöglicht nicht nur eine Ausbildung von undurchsichtigen Duschwänden, sofern beispielsweise der zweite Funktionsraumbereich als Dusche eingerichtet ist, sondern auch eine lichttransparente Türenausbildung, sofern die Lamellen entsprechend wenig geneigt oder nach oben gezogen sind, um hierdurch beispielsweise Licht vom vorderseitigen ersten Funktionsraumbereich in den hinteren zweiten, dritten und gegebenenfalls vierten Funktionsraumbereich einfallen zu lassen.

Zusätzlich kann der gegenüber dem ersten Funktionsraumbereich abtrennbare und gebenüber dem zweiten Funktionsraumbereich abgetrennte vierte Funktionsraumbereich mit weiteren Funktionseinrichtungen angeordnet sein, wobei eine dritte Öffnung des vierten Funktionsraumbereiches mittels einer zweiten Tür verschließbar ist. Hierfür weisen die erste und die zweite Tür sich überschneidende Schwenkbereiche auf, welche insbesondere dann realisierbar sind, wenn es sich bei dem zweiten Funktionsraumbereich um einen in der hinteren Hälfte der Nutzfahrzeugkabine mittig angeordneten Bereich und bei dem dritten und vierten Funktionsraumbereich um links- und rechtsseitig von dem Funktionsraumbereich angeordnete Abschnitte handelt.

Der zweite, dritte und vierte Funktionsraumbereich sind in Fahrtrichtung betrachtet hinter dem ersten Funktionsraumbereich nebeneinander liegend angeordnet und mittels Türen und/oder Trennwänden gegeneinander abgetrennt. Durch eine derartige Anordnung von Trennwänden und Türen, die sich entweder in Fahrzeuglängs- oder in Fahrzeugbreitenrichtung erstrecken, kann vorteilhaft die erfindungsgemäße Tür zum Verschließen und Öffnen von zwei Räumen bzw. Funktionsraumbereichen verwendet werden, in dem sie lediglich um 90 ° verschwenkt werden muss, um in ihren Endstellungen gleichzeitig der Öffnung des einen Raumes und die Schließung eines weiteren Raumes zu bewirken.

Sofern sich die gesamte Nutzfahrzeugkabine über eine Länge von beispielsweise ca. 180 - 300 cm, vorzugsweise 207 cm und eine Breite von ca. 200 - 280 cm, vorzugsweise 230 cm in ihrer Grundfläche erstreckt, weist der erste Funktionsraumbereich in Fahrzeuglängsrichtung eine Länge von 100 - 170 cm, vorzugsweise 130 cm und die gleiche Breite wie die Breite der Nutzfahrzeugkabine auf. Die hinteren Funktionsraumbereiche, welche nebeneinander angeordnet sind, weisen in Fahrzeuglängssrichtung betrachtet eine Länge von 50 - 120 cm, vorzugsweise 70 cm auf.

Wenn der zweite, der dritte und der vierte Funktionsraumbereich in nahezu rechteckiger Form im hinteren Bereich der Nutzfahrzeugkabine nebeneinander angeordnet sind, kann der zweite Funktionsraumbereich eine Breite von 50 -100 cm, vorzugsweise 70 cm, der dritte Funktionsraumbereich eine Breite von 60 - 100 cm, vorzugsweise 80 cm und der vierte Funktionsraumbereich eine Breite von ebenso 60 - 100 cm, vorzugsweise 80 cm aufweisen.

Sämtliche Funktionsraumbereiche sind mit der für Nutzfahrzeugkabinen üblichen Höhe von beispielsweise 190 - 230 cm, vorzugsweise von 210 cm ausgestattet.

Es eignen sich bereits Kabinen mit einer Grundfläche von ca. 1,5 x 2,5 m für eine derartige vorteilhafte Aufteilung in vier verschiedene Funktionsraumbereiche zur Schaffung eines multifunktionalen Funktions- und Innenraumkonzeptes einer Nutzfahrzeugkabine. Dies entspricht handelsüblichen bisherigen Nutzfahrzeugkabinen.

In dem zweiten Funktionsraumbereich, der zugleich als Zugang für den dritten und den vierten Funktionsraumbereich dient, wird vorteilhaft zusätzlich die Duscheinrichtung angeordnet.

In dem dritten Funktionsraumbereich ist beispielsweise eine Sanitäreinrichtung, wie eine Toilette mit darüber angeordnetem Waschtisch, der bei Benutzung der Toilette nach oben abgeklappt werden kann, eingerichtet und in dem vierten Funktionsraumbereich ist eine kleine Kücheneinrichtung inkl. ein Kühlschrank und Oberschränken sowie einem Herd angeordnet, wobei dieser Funktionsraumbereich einen Abluftkanal aufweist, der evtl. entstehenden Essensgeruch direkt über eine Abluftleitung nach außen außerhalb der Nutzfahrzeugkabine leitet.

Eine derartige Anordnung weist den sich überschneidenden Schwenkbereich der beiden Türen im zweiten Funktionsraumbereich auf, in welchem zugleich die Dusche angeordnet ist. Hierfür weist die erste Tür, die ebenso zur Abtrennung gegenüber dem ersten Funktionsraumbereich dient, vorteilhaft Gummidichtungen auf, sofern derartige Dichtungen nicht bereits durch die Magnetelemente gegeben sind. Die Gummidichtungen stellen eine wasserdichte Abgrenzung zwischen dem zweiten und dem ersten Funktionsraumbereich, aber auch beim Verschwenken der Tür zwischen dem zweiten und dem dritten Funktionsraumbereich dar. Auf diese Weise wird das Duschwasser lediglich innerhalb des zweiten Funktionsraumbereiches verteilt, jedoch nicht in den benachbarten Funktionsraumbereichen.

Die erste und die zweite Tür können anstelle von Türklinken oder Magnetverschlüssen auch mit einfachen Schnappverschlüssen versehen sein, die bei leichtem Druck einschnappen. Auf diese Weise wird vorteilhaft der für die Türklinken benötigte Platz eingespart und ein schnelles Öffnen und Schließen der Türen ermöglicht.

Durch eine derartige Anordnung der einzelnen Funktionsraumbereiche in Kombination mit den ersten und den zweiten Türen wird ermöglicht, dass der vierte Funktionsraumbereich, welcher mit einer Kücheneinrichtung ausgestattet ist, zusätzlich in Kombination mit einem Teil des ersten Funktionsraumbereiches zu einem Schlafbett umgebaut werden kann, indem eine Trennwand zwischen dem ersten und dem vierten Funktionsraumbereich zu einem Bett oder alternativ das an der Rückwand der Nutzfahrzeugkabine in eingeklapptem Zustand aufbewahrte Bett ausgeklappt wird. Dies ermöglicht, dass die momentan schlafende Person bei geschlossener erster Tür, welche die Trennung zwischen dem zweiten und dem ersten Funktionsraumbereich darstellt, die zuvor schlafende Person aus dem vierten Funktionsraumbereich herausgehend den zweiten und dritten Funktionsraumbereich benutzen kann, um beispielsweise auf die Toilette zu gehen.

Durch die Anordnung von insgesamt mindestens drei, vorzugsweise vier Funktionsraumbereichen, die sowohl eine Kochgelegenheit als auch eine Waschgelegenheit, eine Toilette, eine Dusche und den Fahrerraum an sich zur Verfügung stellen können, wird es ermöglicht, dass lange Fahrstrecken mit den LKWs zurückgelegt werden können, ohne dass der Fahrer die Nutzfahrzeugkabine während einer Fahrerpause verlassen muss. Hierdurch wird sichergestellt, dass keine unbefugte Person während der Zeit, in der der LKW verlassen ist, auf den LKW zugreifen und evtl. den gesamten LKW einschließlich der Ladung stehlen kann. Vielmehr ist der LKW durch den Einen oder die zwei Fahrer ständig bewacht und minimiert somit das Sicherheitsrisiko, welches in manchen Ländern vorhanden ist.

Der Funktionsraumbereich mit der Kücheneinrichtung weist vorzugsweise einen größeren Kühlschrank, einen Heißluftbackofen und ein Kochfeld, vorzugsweise Cerankochfeld, welches mit Gas mittels beispielsweise einer mitgeführten Gasflasche betrieben wird, auf. Alternativ kann eine Stromversorgung mittels der Fahrzeugbatterie oder einem weiteren Batterieelement angewendet werden. Die eine Sanitäreinrichtung darstellende Nasszelle in dem weiteren Funktionsraumbereich ist mit einer Toilette ausgestattet, die unterseitig einen Auffangtank, der bei Gelegenheit entleert werden muss, ausgestattet.

Durch eine derartige Anordnung einer Tür und gegebenenfalls zweier Türen in Kombination mit drei bzw. vier Funktionsraumbereichen werden vorteilhaft lebenswerte Räume geschaffen, in welchen die Intimsphäre des Einzelnen gewahrt werden kann, da jede Person unbeobachtet von der anderen Person nachts aus ihrem Bett heraus die Sanitäreinrichtungen mit der Toilette benutzen kann.

Die erste Tür ist an der vertikal sich erstreckenden Säule, welche sich vorteilhaft vom Boden bis zur Decke der Nutzfahrzeugkabine erstreckt, mittels Scharniergelenke befestigt, die derart ausgebildet sein müssen, dass sie eine 90 °-Schwenkung ausführen kann. Vorteilhaft sind die Scharniergelenke ebenso oder ausschließlich mit Anschlägen innerhalb des Gelenkes ausgebildet, die eine Schwenkung der Tür bis zu 90 ° jedoch nicht mehr zulassen. Auf diese Art und Weise wird ermöglicht, dass sich ein Anschlag im Trennlinienbereich zwischen den einzelnen Funktionsraumbereichen erübrigt, so dass hierfür keine störenden Vorsprünge an der Nutzfahrzeugkabineninnenwand und gegebenenfalls an einer zusätzlichen Trennwand, die an der Türöffnung anschließt, notwendig sind.

Zudem können hierdurch Türschwellerelemente im Bodenbereich der Türöffnungen weggelassen werden, um eine Stolpergefahr zu reduzieren, obgleich ein derartiges Schwellerelement zwischen dem ersten und zweiten Funktionsraumbereich aufgrund des Duschwassers, welches sich am Boden des zweiten Funktionsraumbereiches beim Duschen sammeln würde, zur Verhinderung des Eindringens von Wasser in dem ersten Funktionsraumbereich wünschenswert ist.

Alternativ kann in diesem Zusammenhang eine im Bodenbereich zwischen den Funktionsraumbereichen eingelassene Rinne dazu dienen, das zu dem Rand hinlaufende Wasser aufzufangen und über Ausnehmungen im Boden entweder in einen Tank oder direkt ins Freie abzuleiten.

In den Zeichnungen ist jeweils die gesamte Nutzfahrzeugkabine oder Teile hiervon in ihrem Innenraum einschließlich zusätzlicher Schlafplätze beispielhaft ebenso wie einzelne Türelemente dargestellt. Es zeigen:
- Fig. 1: in perspektivischer räumlicher Darstellung eine Nutzfahrzeugkabine mit insgesamt vier Funktionsraumbereichen;
- Fig. 2: einen Ausschnitt des Innenraums einer Nutzfahrzeugkabine in einer von schräg oben betrachteten Hinteransicht unter teilweiser Weglassung der Außenwände in einer schematischen Darstellung mit geschlossenen ersten und zweiten Türen;
- Fig. 3: eine Nutzfahrzeugkabine in schematischer Darstellung in einer von schräg oben betrachteten Hinteransicht mit einer eine weitere Türöffnung schließenden ersten Tür und einer geschlossenen zweiten Tür;
- Fig. 4: einen Ausschnitt einer Nutzfahrzeugkabine in einer schematischen Darstellung in einer von schräg oben betrachteten Hinteransicht mit der die weitere Türöffnung schließenden ersten Tür und der geöffneten zweiten Tür;
- Fig. 5: eine Draufsicht auf den Innenraum der Nutzfahrzeugkabine mit teilweise dargestellten Außenwänden und mit insgesamt vier Funktionsraumbereichen;
- Fig. 6: in einer perspektivischen räumlichen Darstellung einen Ausschnitt einer Nutzfahrzeugkabine mit insgesamt vier Funktionsraumbereichen und mit geschlossenen ersten und zweiten Türen gemäß einer weiteren Ausführungsform. Eine Kochplatte ist im vierten Funktionsraumbereich bevorzugt mit darunter angeordnetem Kühlschrank zur Bildung eines Küchenraumes angeordnet;
- Fig. 7: in einer perspektivischen räumlichen Darstellung die Nutzfahrzeugkabine gemäß der weiteren Ausführungsform mit der ersten Tür in geöffneter Stellung bezüglich einer ersten Türöffnung;
- Fig. 8: in einer perspektivischen Darstellung die in Fig. 7 wiedergegebene Ansicht der Nutzfahrzeugkabine, jedoch mit geschlossener erster Tür bezüglich der ersten Türöffnung;
- Fig. 9: die erste und zweite zweiteilige Tür in geschlossener Stellung ;
- Fig. 10 a und 10 b: eine der zweiteiligen Türen in perspektivischer Darstellung im eingeklappten und aufgeklappten Zustand, und
- Fig.11: in einer Ausschnittsdarstellung eine Duscharmatur in einer der Türsäulen.

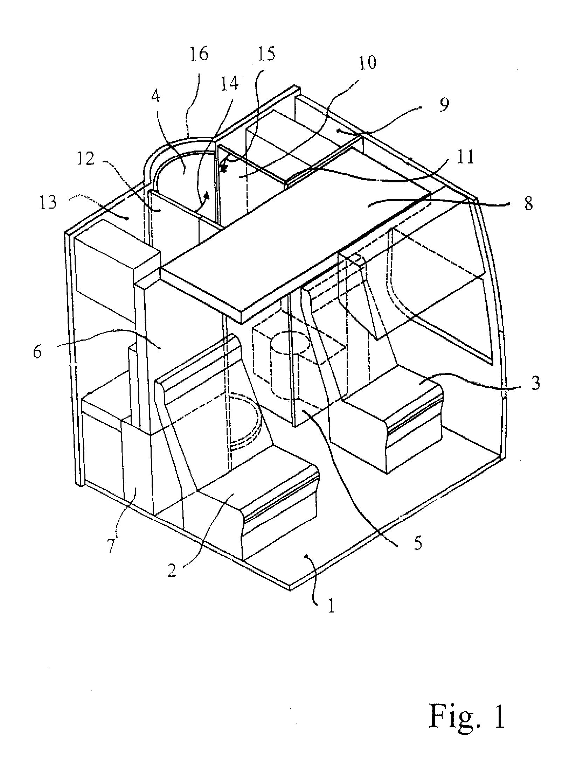

In Fig. 1 ist in einer perspektivischen von schräg vorne betrachteten Ansicht schematisch ein Innenraum einer Nutzfahrzeugkabine dargestellt. In einem ersten Funktionsraumbereich 1 sind Fahrzeugsitze 2 und 3 angeordnet. Dieser erste Funktionsraumbereich 1 ist von einem zweiten Funktionsbereich 4 mittels einer Trennwand 5, einer in diesem Falle aufklappbaren Trennwand 6 und einer dazwischen angeordneten verschließbaren Türöffnung 7 getrennt.

Ein an der Decke angeordnetes Bett 8 kann im ersten Funktionsraumbereich nach unten abgehängt beziehungsweise nach unten verschoben werden.

Ein dritter Funktionsraumbereich 9 ist gegenüber dem zweiten Funktionsraumbereich 4 mittels einer ersten Tür 10, die an einer Säule 11 schwenkbar gelagert ist, verschließbar. Die Tür 10 kann bei einer durchgeführten 90° Schwenkung dazu verwendet werden, die Türöffnung 7 zu verschließen, welches sich zwischen dem ersten Funktionsraumbereich und dem zweiten Funktionsraumbereich erstreckt.

Vorteilhaft weist die Tür 10 ebenso wie eine zweite Tür 12 eine Höhe auf, die der Raumhöhe des Innenraumes beziehungsweise der Funktionsraumbereiche entspricht, sodass ober- und unterseitig in den Türöffnungsbereichen keine zusätzlichen Türschwellelemente beziehungsweise Türrahmenelemente erforderlich sind.

Die zweite Tür 12 dient zum Verschließen eines vierten Funktionsraumbereiches 13 gegenüber dem zweiten Funktionsraumbereich 4 und kann durch eine Schwenkbewegung in Richtung der Rückwand in den zweiten Funktionsraumbereich 4 hinein geöffnet werden. Die erste und die zweite Tür 10, 12 weisen sich überschneidende Schwenkbereiche im Bereich des zweiten Funktionsraumbereiches 4 auf, wie es aus den Pfeilen 14, 15 ersichtlich ist.

Im zweiten Funktionsraumbereich 4 besteht eine nach hinten ausgeformte Rückwand 16, die bogenförmig zur Vergrößerung des Innenraumes ausgestaltet ist. Eine derartige bogenförmige Rückwand ist bei herkömmlichen LKWs deshalb möglich, da diese Rückwand selbst bei aufgelegtem Hänger während einer Schwenkung des Hängers bei einer Kurvenfahrt als bisher ungenutzter Bereich aufgetreten ist und auftritt.

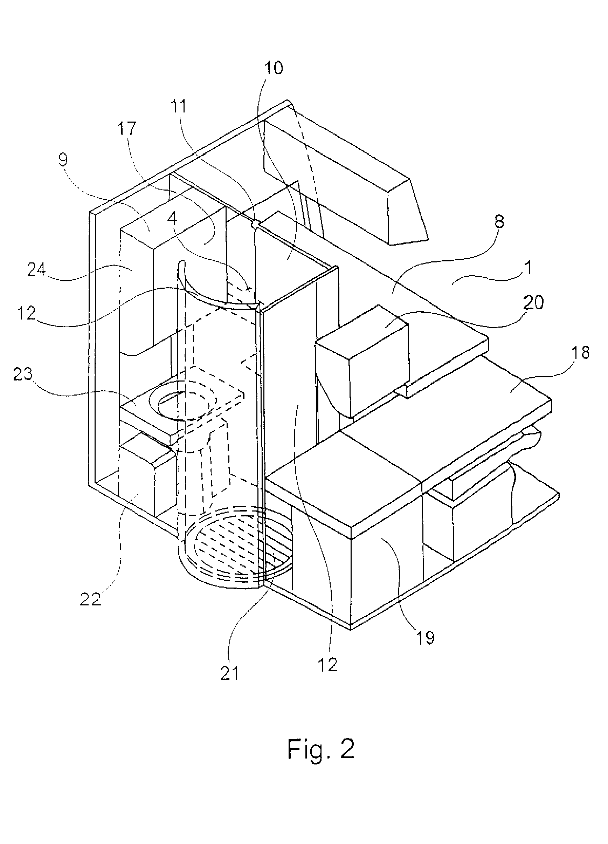

In Fig. 2 ist in einer schematischen Ausschnittsdarstellung der Innenraum der Nutzfahrzeugkabine von schräg oben und hinten dargestellt, wobei in dieser Darstellung die erste Tür 10 in einem die Türöffnung 7 verschließenden Zustand angeordnet ist, um den ersten Funktionsraumbereich 1 gegenüber dem zweiten Funktionsraumbereich abzutrennen.

Hierfür ist die erste Tür 10 oben um die Säule 11, welche sich vorteilhaft vom Boden bis zur Decke des Fahrzeugkabineninnenraumes erstreckt, um 90° verschwenkt worden, wobei hier nicht näher dargestellte Scharniergelenke zwischen der Tür und der Säule 11 derart ausgebildet sind, dass sie eine maximale Schwenkung von 90° zulassen. Eine weitere Türöffnung 17 zwischen dem zweiten und dritten Funktionsraumbereich 4, 9 ist somit geöffnet.

Die zweite Tür 12 befindet sich im geschlossenen Zustand und trennt den zweiten Funktionsraumbereich 4 von dem vierten Funktionsraumbereich 13, welcher im vorliegenden Fall zu einem Bett 18 in Verbindung mit einem Teil des ersten Funktionsraumbereiches 1 umgebaut wurde, in dem die Trennwand 6 aus Fig. 1 aufgeklappt worden ist. Auf diese Weise wird der vierte Funktionsraumbereich 13 doppelseitig verwendet, nämlich zum einen als Küche und zum anderen als Teil einer Schlafstätte. Zudem ist das Bett 8 gegenüber der in Fig. 1 wiedergegebenen Darstellung abgehängt und bildet eine weitere Schlafstätte.

In dem vierten Funktionsraumbereich ist ein Kühlschrank 19 und ein darüber nicht näher dargestellter Herd angeordnet. Zudem ist ein Hängeschrank 20 für Koch- und sonstiges Küchengeschirr angeordnet.

In dem zweiten Funktionsraumbereich 4 ist eine hier nicht näher dargestellte Dusche mit einer kreisförmigen Grundfläche 21, die das Abfließen des Wassers in den Boden, beispielsweise über dafür angeordnete Rinnen, zulässt, angeordnet.

In dem dritten Funktionsraumbereich 9 ist unterseitig eine Toilette 22 mit einem darüber herrunterklappbaren Waschtisch 23, der bei Benutzung der Toilette 22 aufgeklappt werden kann, eingerichtet. Zudem ist ein Hängeschrank 24 an der Rückseite aufgehängt.

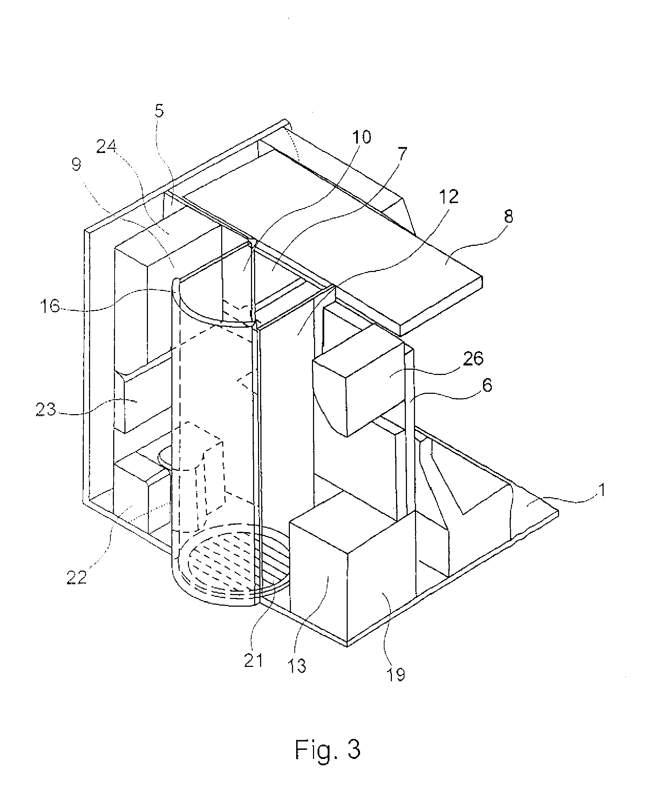

In Fig. 3 ist einer schematischen Darstellung die Nutzfahrzeugkabine in einem Ausschnitt dargestellt, wie er in Fig. 2 in ähnlicher Weise dargestellt ist. Gegenüber der in Fig. 2 wiedergegebenen Darstellung unterscheidet sich die Zeichnung gemäß Fig. 3 darin, dass das abhängbare Hängebett 8 wiederum nach oben gezogen ist, die Trennwand 6 durch Aufklappen des Bettes 18 wieder hergestellt worden ist und die erste Tür 10 sich in einer 90° Schwenkstellung befindet, in der sie die Türöffnung 17 als Trennwand zwischen dem zweiten und dritten Funktionsraumbereich 4, 9 darstellt.

Um eine derartige erste Tür 10 als wasserdichte Trennwand gegenüber den dem zweiten Funktionsraumbereich benachbarten Funktionsraumbereichen zu gestalten, weist die Tür in ihrem Außenrahmenbereich oder die Türöffnung an den komplementär ausgebildeten Stellen Türdichtungen auf, die ein Durchdringen von Wasser bei Benutzen der Duscheinrichtung im zweiten Funktionsraumbereich 4 nicht ermöglicht.

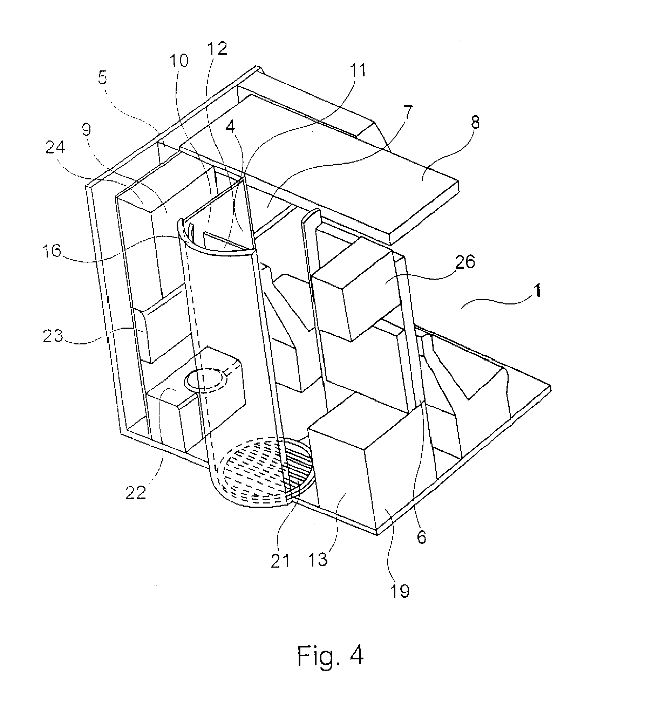

In Fig. 4 ist in einer ähnlichen Darstellung wie in Fig. 2 und 3 wiederum ein Ausschnitt des Innenraumes der Nutzfahrzeugkabine dargestellt, in diesem Fall jedoch mit einer geöffneten zweiten Tür 12, um einem Fahrer, der sich im ersten Funktionsraumbereich 1 befindet, den vierten Funktionsraumbereich 13 zugängig zu machen. Hierdurch kann der Fahrer über den zweiten Funktionsraumbereich, welcher die Dusche darstellt, zu der Küche gelangen, um eine Mahlzeit zuzubereiten. Anschließend kann der Fahrer mit der zubereiteten Mahlzeit in den Funktionsraumbereich 1 gehen und dort einen hier nicht näher dargestellten Klapptisch zwischen den beiden Fahrzeugsitzen 2, 3 aufbauen und durch Drehung einer der Sitze oder beider Sitze zum Tisch hingewandt sitzen, um das Essen einzunehmen.

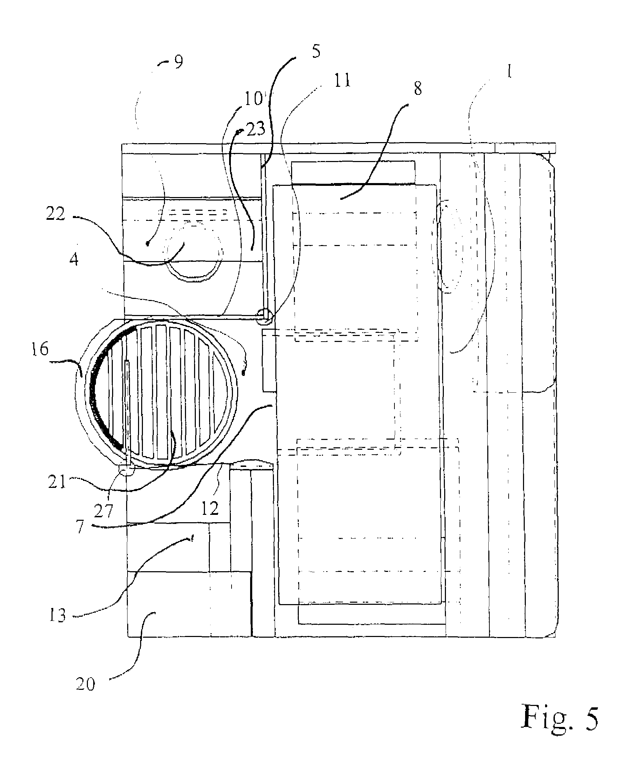

In Fig. 5 wird in einer Draufsicht die Nutzfahrzeugkabine in ihrem Innenraum mit den vier verschiedenen Funktionsraumbereichen 1, 4, 9 und 13 nochmals dargestellt. Dieser Darstellung ist deutlich zu entnehmen, dass die Säule 11 als Aufhängepunkt beziehungsweise Schwenklager für die erste Tür 10 zum Verschließen des dritten Funktionsraumbereiches 9 oder des ersten Funktionsraumbereiches 1 gegenüber dem zweiten Funktionsraumbereich 4 dient.

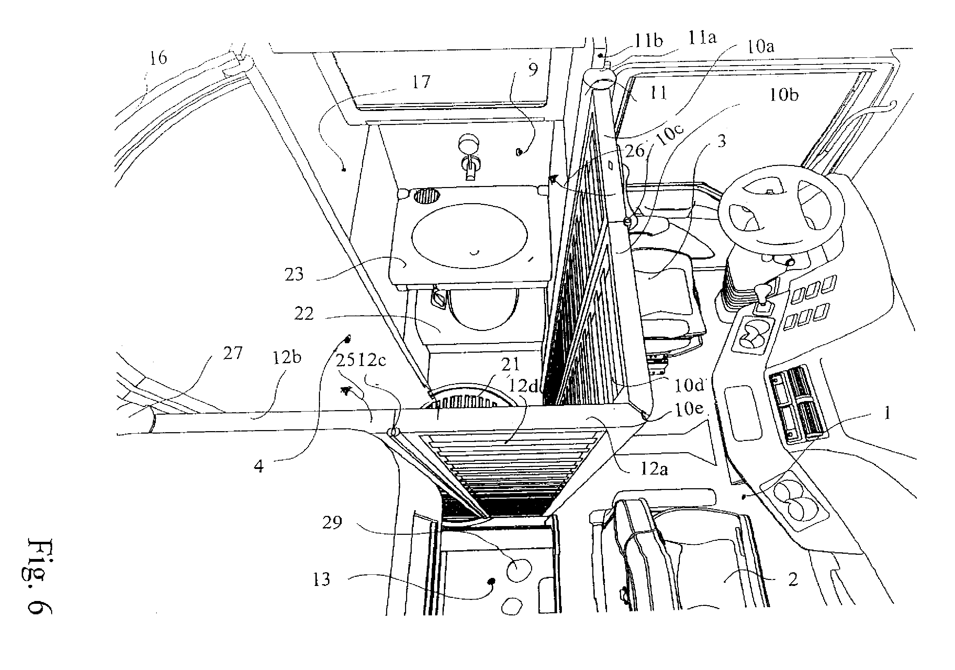

In Fig. 6 ist in einer perspektivischen Darstellung ein Ausschnitt einer Nutzfahrzeugkabine gemäß einer weiteren Ausführungsform der Erfindung gezeigt. Diese dargestellte Ausführungsform unterscheidet sich von der in den vorangegangenen Zeichnungen wiedergegebenen Ausführungsform im wesentlichen dadurch, dass zweiteilige Türen 10a, 10b und 12a, 12b verwendet werden, die aus jeweils zwei Türflügeln 10a, 10b und 12a, 12b, welche mit Scharnieren 10c, 12c verbunden sind, bestehen. Gleiche und geichbedeutende Bauteile sind mit gleichen Bezugszeichen versehen.

Die als Scharnierleisten ausgebildeten Scharniere 10c und 12c dienen dazu, die Türen platzsparend im aufgeklappten Zustand unterbringen zu können, zudem verringert sich hierdurch der Schwenkbereich der beiden Türen 10a, 10b, 12a, 12b.

Jeder Türflügel ist doppelglasig ausgebildet, d. h. zwei zueinander parallel verlaufende Scheiben, die in der Regel aus Kunststoff bestehen, sind vorder- und rückseitig in jedem Türflügelrahmen angeordnet und weisen dazwischen Lamellen 10d und 12d auf, die mittels einer hier nicht näher dargestellten Betätigungseinrichtung höhenverstellbar und auch in ihrer Neigung verstellbar sind. Sowohl die erste Tür 10a und 10b als auch die zweite Tür 12a und 12 b sind an ihren Stirnseiten 10e derart miteinander verbindbar, dass keine weitere Säulenanordnung oder Anordnung eines ähnlichen Elementes zwischen ihnen notwendig ist. Vielmehr wird an diesen Stirnlängsseiten 10e vorzugsweise Magnetelemente, die noch dazu eine geruchs- und wasserabdichtende Wirkung aufweisen, angeordnet, um hierdurch einen sowohl mechanischen, als auch wasser- und geruchsabdichtenden Raum, wie es der zweite Funktionsraumbereich 4 und gegebenenfalls der dritte Funktionsraumbereich 9 darstellen können, zu erhalten.

Pfeile 25 und 26 zeigen die Schwenkrichtung der Türflügel 10a und 12b, wobei die Türflügel 10b und 12a ebenso die Schwenkbewegung gegebenenfalls bezüglich der Türflügel 10a, 12b eingeklappten Zustand durchführen. Die zweite Tür 12a und 12b ist hierbei an einer Säule 27, die im rückwärtigen Bereich der Nutzfahrzeugkabine angeordnet ist, aufgehängt.

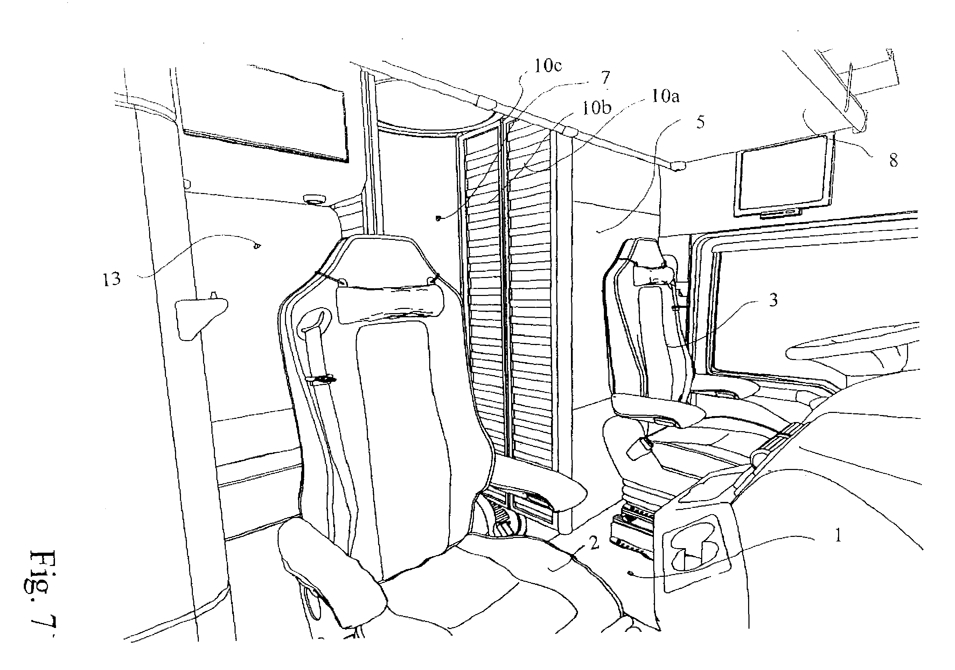

In Fig. 7 wird in einer perspektivischen Darstellung die in Fig. 6 wiedergegebenen Nutzfahrzeugkabine aus der Sicht des Fahrzeugsitz-Funktionsraumbereiches wiedergegeben. Dieser Darstellung ist zu entnehmen, dass - wenn die erste Türöffnung 7 nicht mit der ersten Tür 10a, 10b verschlossen ist, automatisch eine zweite Türöffnung, welche sich zwischen dem zweiten Funktionsraumbereich 4 und dem dritten Funktionsraumbereich 9 befindet, verschlossen ist.

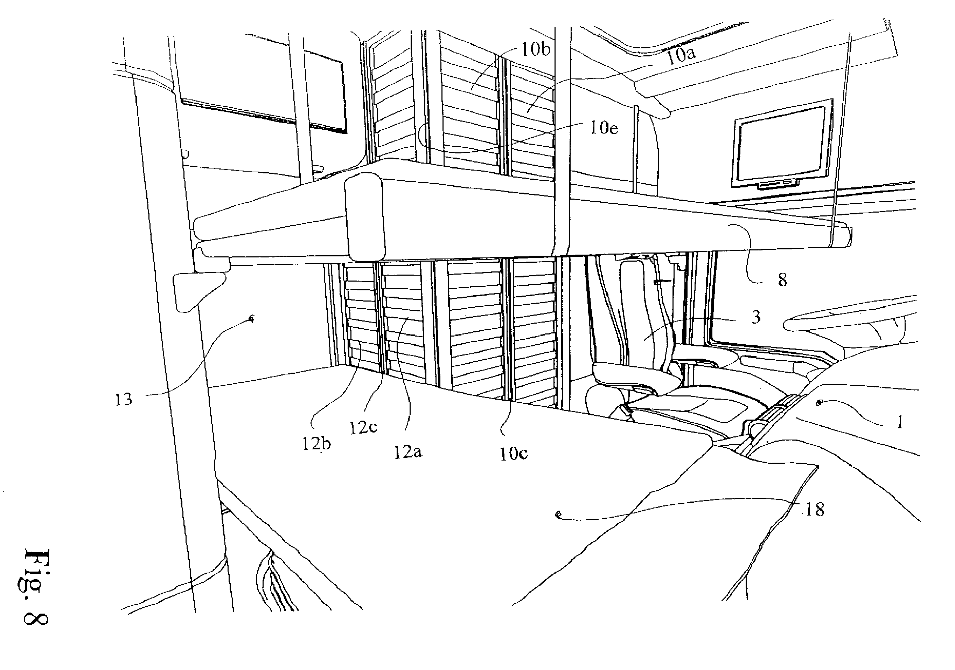

Die in Fig. 8 wiedergegebene perspektivische Darstellung der Nutzfahrzeugkabine entspricht der in Fig. 7 wiedergegebenen Betrachterperspektive, wobei sowohl die erste Tür 10a, 10b als auch die zweite Tür 12a, 12b nun im geschlossenen Zustand bezüglich des ersten Funktionsraumbereiches 1 angeordnet sind. Dies findet durch Aneinanderlegen der beiden Türen in ihrem stirnseitigen Längsseitenbereich 10e statt. Zudem wird in dieser Darstellung ein abgehängtes Bett 8 und auf ein aufgeklapptes Bett 18 wiedergegeben.

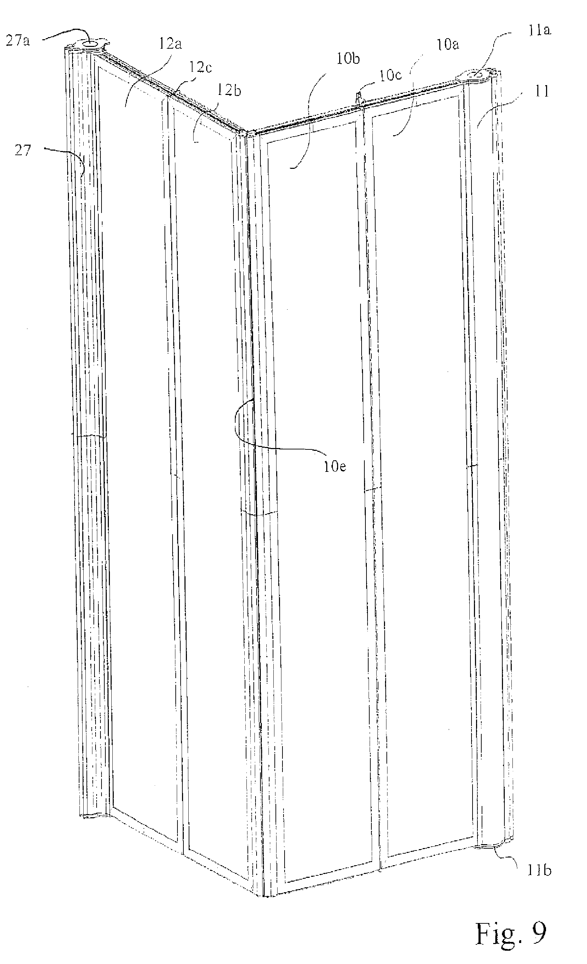

In Fig. 9 werden zwei Türen zum Einbau in eine derartige erfindungsgemäße Nutzfahrzeugkabine dargestellt. Die erste Tür 10a, 10b grenzt mit ihrer stirnseitigen Längsseite 10e an die Stirnseite der zweiten Tür 12a und 12b im geschlossenen Zustand an. Vorzugsweise weisen die Stirnseiten dieser beiden Türen 45 °-Abschrägungen auf, um hierdurch beide Stirnseiten möglichst passgenau aneinander anlegen zu können. Dies bedingt allerdings ein Öffnen dieser zweiteiligen Türen durch Verschwenken beider Türflügel zueinander mittels der Scharnierleiste 10c und 1 c, da ansonsten ein Öffnen der Türen nicht möglich wäre.

Die Säulen 11 und 27 weisen oberseitige Enden 11a, 2a und unterseitige Enden 11b, 27b auf, die an der Innenseite des Nutzfahrzeugkabinendaches und des Bodens fest angebracht sein können. Hierdurch ergibt sich eine Stützfunktion des Nutzfahrzeugkabinenraumes, welche bei Unfällen vorteilhaft sein kann. Zudem kann hierdurch wahlweise eine feste Arretierung der Säulen im Innenraum der Nutzfahrzeugkabine oder eine verschwenkbare Arretierung mittels hier nicht näher dargestellter erster und zweiter Schwenklager eingerichtet werden.

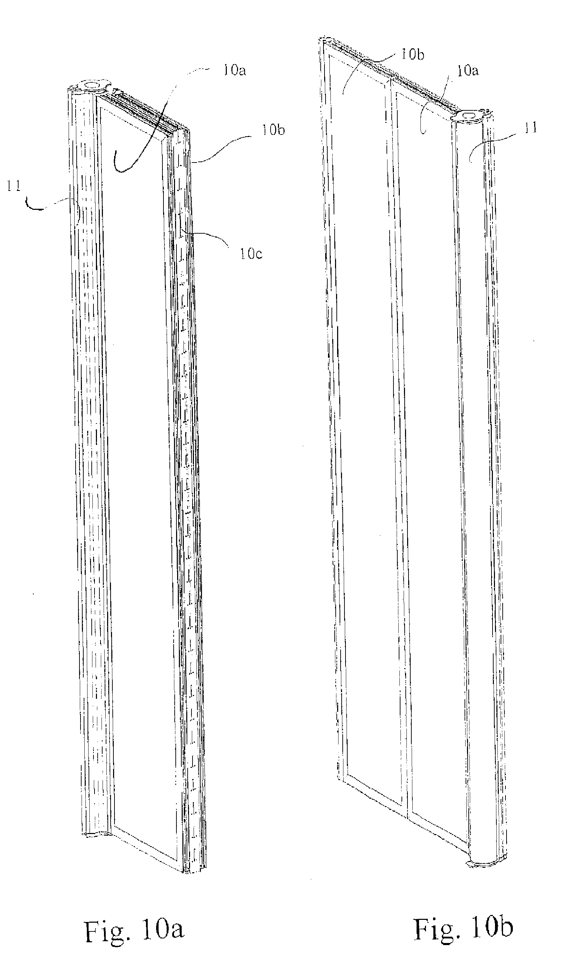

In Fig. 10b ist die türenperspektivische Darstellung in zweiteiliger Form wiedergegeben. Beiden Darstellungen ist deutlich zu entnehmen, dass die zweiteilige Tür im eingeklappten Zustand platzsparend in dem Nutzfahrzeugkabineninneraum angeordnet werden kann, selbst dann, wenn sie nicht zum Schließen einer der Türöffnungen dienen soll.

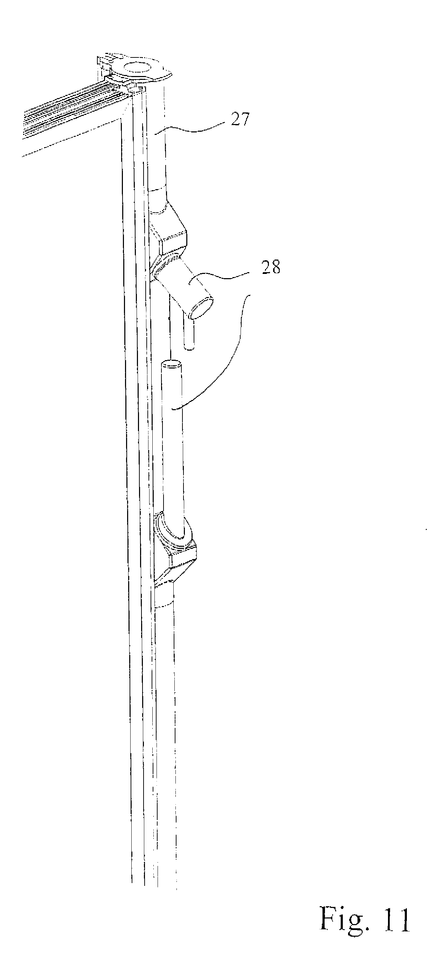

In Fig. 11 wird in einer Ausschnittsdarstellung die Anordnung einer möglichen Duscharmatur 28 innerhalb der Säule 27 dargestellt. Hierdurch wird auf platzsparende und einfache Weise ermöglicht, dass im zweiten Funktionsraumbereich eine Dusche angeordnet ist, ohne dass hierdurch die Bewegungsfreiheit der Person in diesem Funktionsraumbereich wesentlich beeinträchtigt ist. Vorzugsweise ist hierfür die Säule 27 mit entsprechenden Wasserzuführleitungen ausgestattet.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: erster Funktionsraumbereich
- 2,3: Fahrzeugsitze
- 4: zweiter Funktionsraumbereich
- 5: Trennwand
- 6: aufklappbare Trennwand
- 7: Türöffnung
- 8: abhängbares Bett
- 9: dritter Funktionsraumbereich
- 10, 10a, 10b: erste Tür
- 10c, 12c: Scharnierleiste
- 11a, 11b: Säulenenden
- 10c, 12c: Scharniere
- 10d, 12d: Lamellen
- 10e: Längsseite mit Magnetelementen
- 11, 27: Säule
- 12: zweite Tür
- 13: vierter Funktionsbereich
- 14, 15, 25,26: Pfeile
- 16: Rückwand
- 17: Türöffnung
- 18: Bett
- 19: Kühlschrank
- 20: Hängeschrank
- 21: Kreisförmige Grundfläche
- 22: Toilette
- 23: Waschtisch
- 24: Hängeschrank
- 25: Duscharmaturen
- 26: Kochplatte

## Patentansprüche

1. Nutzfahrzeugkabine für Lastkraftwagen, deren Innenraum mindestens zwei Fahrzeugsitze (2, 3) in einem ersten Funktionsraumbereich (1) und mindestens einen zweiten und dritten Funktionsraumbereich (4, 9) mit Funktionseinrichtungen (19 -24, 28), welche in Fahrtrichtung betrachtet hinter dem ersten Funktionsraumbereich (1) angeordnet sind, aufweist, wobei mindestens 1 schwenkbar gelagerte und an einer vertikal sich erstreckenden Säule (11) befestigte Tür (10;10 a, 10 b) zum wahlweisen Verschließen einer ersten Öffnung (17) des gegenüber des zweiten Funktionsraumbereiches (4) abtrennbaren dritten Funktionsraumbereiches (9) oder einer zweiten Öffnung (7) des gegenüber dem ersten Funktionsraumbereiches (1) abtrennbaren zweiten Funktionsraumbereiches (4) angeordnet ist.

2. Nutzfahrzeugkabinen nach Anspruch 1,
**dadurch gekennzeichnet, dass**
die Säule (11) an ihren Enden (11 a, 11b) ober- und unterseitig gegenüber dem Innenraum schwenkbar gelagert ist.

3. Nutzfahrzeugkabine nach Anspruch 2,
**dadurch gekennzeichnet, dass**
die Säule (11) oberseitig mittels eines ersten Schwenklagers am Innendach der Nutzfahrzeugkabine und unterseitig mittels eines zweiten Schwenklagers am Boden der Nutzfahrzeugkabine befestigt ist.

4. Nutzfahrzeugkabine nach Anspruch 1,
**dadurch gekennzeichnet, dass**
die Tür (10; 10 a, 10 b) gegenüber dem Innenraum und an der Säule (11) schwenkbar gelagert ist.

5. Nutzfahrzeugkabine nach einem der vorangegangenen Ansprüche,
**dadurch gekennzeichnet, dass**
die Funktionseinrichtungen Mobiliar- (10, 24), Sanitär- (22, 23, 28) und/oder Kocheinrichtungen (19, 29) umfassen.

6. Nutzfahrzeugkabine nach einem der vorangegangenen Ansprüche,
**dadurch gekennzeichnet, dass**
die Tür (10; 10 a, 10 b) um maximal 90 ° verschwenkbar ist, um in ihren Endstellungen gleichzeitig eine der Öffnungen (7, 17) zu schließen und die andere Öffnung (17, 7) zu öffnen.

7. Nutzfahrzeugkabine nach einem der vorangegangenen Ansprüche,
**dadurch gekennzeichnet, dass**
die Tür mehrteilig mit mindestens 2 Türflügeln (10 a, 10 b), die mit einem sich in Türhöhenrichtung erstreckenden Scharniergelenk (10 c) schwenkbar miteinander verbunden sind, aufgebaut ist.

8. Nutzfahrzeugkabine nach einem der vorangegangenen Ansprüche,
**dadurch gekennzeichnet, dass**
die Tür (10) mindestens zwei parallel zueinander angeordnete lichttransparente Scheiben aufweist.

9. Nutzfahrzeugkabine nach Anspruch 8,
**dadurch gekennzeichnet, dass**
zwischen den Scheiben höhenverstellbare und in ihrem Neigungswinkel verstellbare Lamellen (10 d) angeordnet sind.

10. Nutzfahrzeugkabine nach einem der vorangegangenen Ansprüche,
**dadurch gekennzeichnet, dass**
die Tür (10) an ihren sich in Höhenrichtung erstreckenden Längsseiten beidseitig Türgriffe aufweist.

11. Nutzfahrzeugkabine nach einem der Ansprüche 1 - 9,
**dadurch gekennzeichnet, dass**
die Tür (10) an ihren sich in Höhenrichtung erstreckenden Längsseiten (10 e) Magnetelemente zum Verbinden mit einer benachbarten Trennwand oder einer weiteren Tür (12) aufweist.

12. Nutzfahrzeugkabine nach Anspruch 11,
**dadurch gekennzeichnet, dass**
die Magnetelemente als Dichtelemente ausgebildet sind.

13. Nutzfahrzeugkabine nach einem der vorangegangenen Ansprüche,
**dadurch gekennzeichnet, dass**
die Tür (10; 10 a, 10 b) einen Verschließmechanismus zum Verschließen und Öffnen der Tür (10; 10 a, 10 b) von ausschließlich einer wählbaren Türseite aus ohne eine mögliche Betätigung des Verschließmechanismusses von der anderen Türseite aus aufweist.

14. Nutzfahrzeugkabine nach einem der vorangegangenen Ansprüche,
**gekennzeichnet durch**
einem gegenüber dem ersten Funktionsraumbereich (1) abtrennbaren und gegenüber dem zweiten Funktionsraumbereich (4) abtrennbaren vierten Funktionsraumbereich (13) mit weiteren Funktionseinrichtungen (19, 20, 29) wobei eine dritte Öffnung des vierten Funktionsraumbereiches (13) mittels einer zweiten Tür (12; 12 a, 12 b) verschließbar ist.

15. Nutzfahrzeugkabine nach einem der vorangegangenen Ansprüche,
**dadurch gekennzeichnet, dass**
die ersten und die zweite Tür (10; 10 a, 10b; 12; 12 a, 12 b) sich überschneidende Schwenkbereiche aufweisen.

16. Nutzfahrzeugkabine nach Anspruch 14 oder 15,
**dadurch gekennzeichnet, dass**
der zweite Funktionsraumbereich (4) eine Duscheinrichtung (28), der dritte Funktionsraumbereich (9) eine Sanitäreinrichtung (22, 23) und der vierte Funktionsraumbereich (13) eine Kücheneinrichtung (19, 29) beinhaltet.

17. Nutzfahrzeugkabine nach einem der vorangegangen Ansprüche,
**dadurch gekennzeichnet, dass**
der zweite, dritte und vierte Funktionsraumbereich (4, 9, 13) in Fahrtrichtung betrachtet hinter dem ersten Funktionsraumbereich (1) nebeneinander liegen und angeordnet sind und mittels Türen (10; 10 a, 10 b; 12; 12 a, 12 b) und/oder Trennwände gegeneinander abgetrennt sind.
